(19) Europäisches Patentamt
European Patent Office
Office européen des brevets

(11) EP 1 500 930 A1

(12) # EUROPEAN PATENT APPLICATION

published in accordance with Art. 158(3) EPC

(43) Date of publication:
**26.01.2005 Bulletin 2005/04**

(21) Application number: **03715426.7**

(22) Date of filing: **26.03.2003**

(51) Int Cl.[7]: **G01N 31/22**, G01N 21/77, G01N 21/78

(86) International application number:
**PCT/JP2003/003735**

(87) International publication number:
**WO 2003/091724 (06.11.2003 Gazette 2003/45)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.04.2002 JP 2002122612**

(71) Applicants:
- **Hashiba, Tomohiko**
**Tokyo 107-0062 (JP)**
- **Bio Media Co. Ltd.**
**Tokyo 105-0013 (JP)**

(72) Inventors:
- **Hashiba, Tomohiko**
**Minato-ku, Tokyo 107-0062 (JP)**
- **Kawamura, Koji**
**Mattou-shi, Ishikawa 924-0882 (JP)**

(74) Representative: **Einsel, Martin**
**Patentanwälte,**
**Einsel & Kollegen,**
**Jasperalle 1a**
**38102 Braunschweig (DE)**

(54) **METHOD OF MEASURING FORMALDEHYDE CONCENTRATION OF GAS AND MEASURING INSTRUMENT**

(57) A method of speedily measuring the formaldehyde concentration of test gas with high sensitivity without suffering influences of coexisting gases; and a measuring instrument therefor. In particular, a method of measuring the formaldehyde concentration characterized in that a test gas is brought into contact with a filter wetted with a color forming agent consisting of an alkali aqueous solution of 4-amino-3-hydrazino-5-mercapto-1,2,4-triazole (AHMT) so as to induce color formation, and that the formaldehyde concentration of test gas is determined on the basis of the degree of color formation; and a measuring instrument including a light emitting element (LED), a light receiving element (PIN type photodiode) and a display arranged so as to optically measure the degree of color formation.

Fig. 6

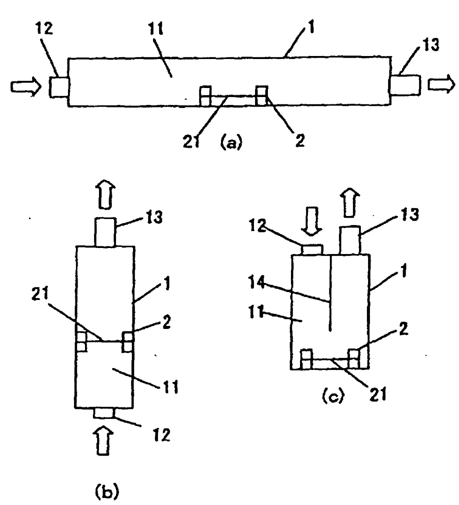




Printed by Jouve, 75001 PARIS (FR)

## Description

Technical Field

The present invention relates to a method of measuring the concentration of formaldehyde in an atmosphere and more particularly to a method of measuring formaldehyde concentration with 4-amino-3-hydrazino-5- mercapto-1, 2, 4-triazole (AHMT) as a color reagent and a formaldehyde concentration measuring apparatus therefor.

Background Art

The enhancement of airtightness of the state-of-the-art living environment, particularly houses and buildings made of building materials and interior materials containing chemical substances, helps these chemical substances to put the residents or users in physical disorder when diffused to the atmosphere. These symptoms occur in variety. Most of the causes of these physical disorders have been left unsolved. These physical disorders are considered to be caused by various factors in combination. Therefore, these physical disorders are normally called "sick house syndrome". In particular, formaldehyde contained in adhesives for building such as plywood adhesive or paste for clothing is regarded as one of substances causing these physical disorders. WHO strictly regulates the standard indoor concentration of formaldehyde to 0.08 ppm or less.

As methods and apparatus of measuring the concentration of formaldehyde in a gas there have been known a formaldehyde indicator tube utilizing the change in the color of an indicator by a free acid produced by the following reaction of formaldehyde with hydroxylamine phosphate according to JIS K0604:

$$3HCHO + (NH_2OH)_3 \cdot H_3PO_4 \rightarrow H_3PO_4 + 3HCN{=}NCH + 3H_2O$$

a method and apparatus of measuring the change in color of the surface of a test paper mixed with silica gel by a free acid produced by the reaction of formaldehyde with hydroxylamine as mentioned above caused by allowing a gas containing formaldehyde to be detected to come in contact with a detection tab having hydroxylamine sulfate and methyl yellow of pH indicator supported on the test paper using'a light-emitting element (LED) and a light-receiving element (PIN type photodiode) (Type FP-85 multi gas finder; Type FP-250F1W formaldehyde monitor: produced by RIKEN KEIKI CO., LTD.), a method and apparatus of measuring the tone of color developed by passing a gas to be detected through a collecting liquid (0.5% $H_3BO_3$ solution) to collect formaldehyde, adding 4-amino-3-hydrazino-5-mercapto-1,2,4-triazole (AHMT) to the collecting liquid to cause reaction under alkaline conditions and then adding potassium periodate ($KIO_4$) to the collecting liquid using a colorimeter and a spectrophotometer (SILSET: produced by Shimadzu Corporation),
a method of analyzing formaldehyde adsorbed by an adsorbent or absorbed by an absorbent using a high-degree analytical instrument such as gas chromatograph (GC) and high pressure liquid chromatograph (HPLC), an electrochemical analytical method such as controlled potential electrolysis involving the measurement of oxidation potential of formaldehyde oxidized on an electrode, and a chemiluminescence analysis involving the measurement of emission intensity of orange light generated when formaldehyde is oxidized in the presence of hydrogen peroxide and gallic acid in an alkaline aqueous solution.

Among these methods, the method involving the use of an indicator tube and a hydroxylamine sulfate test paper is advantageous in that the apparatus therefor is portable, allowing the user to know the measurements in situ but is disadvantageous in that when the gas to be detected also contains an oxidizing gas such as NOx, acetaldehyde, acetone, ammonia, etc., the measurement can be affected by these components, making it impossible to obtain accurate formaldehyde concentration. Further, in order to detect formaldehyde concentration so accurately that WHO's indoor standard (0.08 ppm) is met, about 30 minutes of gas passage are required.

The method involving the use of AHTM as a color reagent is based on the following reaction of formaldehyde with AHTM:

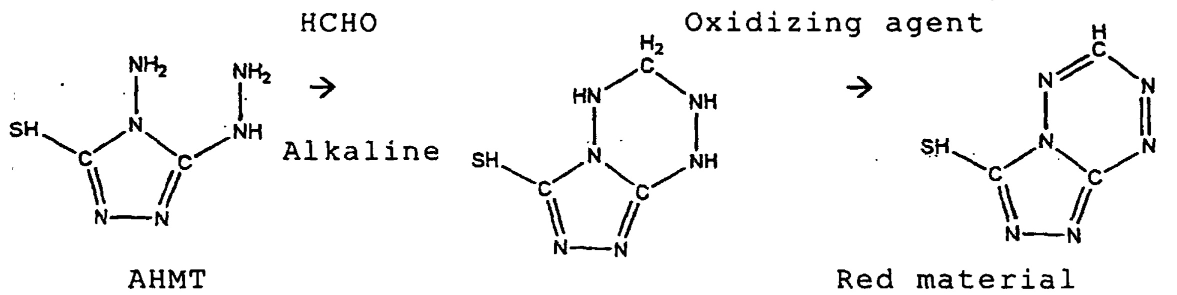


The aforementioned method is advantageous in selectivity that allows the quantitative determination of only formaldehyde without being subject to interference from aldehydes other than formaldehyde, No2-, SO32- and other gases present in the atmosphere but is disadvantageous in that the reaction of formaldehyde with AHTM requires 15 to 20 minutes for first stage reaction, totaling 30 minutes or more for the entire measurement.
The other methods, too, have both advantages and disadvantages and leave something to be desired in any of selectivity of gases present with formaldehyde, detection sensitivity, measuring time, etc.
An object of the present invention is to provide a method of measuring the concentration of formaldehyde in a gas to be detected at a high sensitivity in a short period of time without being subject to effect of gases present therewith.
Another object of the present invention is to provide a formaldehyde concentration measuring apparatus for use in the aforementioned method.

Disclosure of the Invention

The present inventors made extensive studies of the accomplishment of the aforementioned objects. A gas to be detected containing formaldehyde was introduced and brought into contact with a filter wet with a color reagent comprising an aqueous solution of potassium hydroxide containing AHTM. As a result, it was found that the color reagent undergoes color development without any oxidizing agent and the degree of color development is substantially proportional to formaldehyde concentration within a range of 1 ppm or less in the gas to be detected.
The present invention concerns a method of measuring the concentration of formaldehyde in a gas, characterized in that the concentration of formaldehyde in a gas to be detected is determined on the basis of the tone or degree of the color of a filter which is wet with a color reagent comprising an alkaline aqueous solution of 4-amino-3-hydrazino-mercapto- 1,2,4-triazole and gives no background color development due to wetting with the color reagent by allowing the color reagent and the gas to be detected to come in contact with each other on or through the filter so that formaldehyde in the gas to be detected acts on the filter.
The aforementioned method comprises at least:

(a) a step of dissolving an acidic aqueous AHMT-solution obtained by dissolving 4-amino-3-hydrazino-mercapto-1,2,4-triazole (AHMT) in an acidic aqueous solution and an alkaline metal hydroxide in water and mixing the solution with an alkaline aqueous solution to prepare a color reagent;
(b) a step of wetting the filter with the color reagent,
(c) a step of introducing the gas to be detected onto or into the filter to allow the gas to be detected and the color reagent to come in contact with each other; and
(e) a step of measuring the tone or degree of color of the filter.

In a preferred embodiment of the aforementioned measuring method, the filter is selected from the group consisting of glass filter paper, silica fiber filter paper and quartz filter paper.
The present invention also concerns an apparatus of measuring the concentration of formaldehyde in a gas comprising a gas flow path formed between a detection gas inlet and a detection gas outlet connected to a suction pump and a detection tab detachably mounted in the gas flow path at a predetermined position, characterized in that the detection tab comprises a filter mounted thereon, said filter being wet with a color reagent comprising an alkaline aqueous solution of 4-amino-3-hydrazino- mercapto-1,2,4-triazole (AHMT) and giving no background color development due to wetting with the color reagent, so that when the color reagent and the gas to be detected are brought into contact with each other, the filter wet with the color reagent undergoes color development with formaldehyde in the gas to be detected.

In the aforementioned measuring apparatus, the detecting tab is formed by a filter, a frame and a filter press and the filter is selected from the group consisting of glass filter paper, silica fiber filter paper and quartz filter paper, extends inside the frame without clearance and is fixed by the filter press.

In a preferred embodiment of the aforementioned measuring apparatus, the detecting tab is tabular and is disposed in the gas flow path at a predetermined position by being inserted into a slit provided in the main body.

In a further preferred embodiment of the aforementioned measuring apparatus, the tabular detecting tab is disposed in the gas flow path at a predetermined position by being received in a cassette which is mounted in a slit provided in the main body.

In a still further embodiment of the measuring apparatus of the present invention, there are further provided a light-emitting element for irradiating at least the surface of the filter with light, a light-receiving element for catching the light reflected by the surface of the filter and a display, the change (% response) in the intensity of light reflected by the surface of the filter from before to after contact with the gas to be detected is measured by the light-emitting element and the formaldehyde concentration calculated from the degree of color development of the surface of the filter based on the measurements is displayed on the display.

In a still further embodiment of the measuring apparatus of the present invention, there are provided a plurality of reagent feed pipes and reagent mixing pipes, the reagent feed pipes each comprise a graduated transparent pipe portion and a soft cover portion which can deform when pressed externally and are detachably mounted on the top of the reagent mixing pipes and the reagent mixing pipes each further comprise a color reagent dropping device partially having a soft pipe portion deformable by external pressure for dropping a predetermined amount of the color reagent onto the filter of the detecting tab.

Brief Description of the Drawings

Fig. 1 illustrates the absorbance (550 nm) with respect to various aldehyde concentrations obtained in Reference Example 1 (AHMT solution method).
Fig. 2 illustrates the degree of color development with respect to sampling time (% response) obtained in Example 1 (inventive method).
Fig. 3 illustrates the degree of color development with respect to formaldehyde concentrations (ranging from 0 to 1 ppm) (% response) obtained in Example 1 (inventive method).
Fig. 4 illustrates the degree of color development with respect to formaldehyde concentrations (ranging from 0 to 4 ppm) (% response) obtained in Example 1 (inventive method).
Fig. 5 illustrates the degree of background color development with respect to sampling time (% response) obtained in Example 2.
Fig. 6 is a diagram illustrating how a gas to be detected and a filter come in contact with each other in the formaldehyde concentration measuring apparatus of the present invention, wherein Fig. 6(a) illustrates a filter surface contact type formaldehyde concentration measuring apparatus, Fig. 6(b) illustrates an in-filter passing contact type formaldehyde concentration measuring apparatus and Fig. 6(c) illustrates a filter surface collision type formaldehyde concentration measuring apparatus.
Fig. 7 is a diagram illustrating a detecting tab.
Fig. 8 is a diagram illustrating a preferred embodiment of the formaldehyde concentration measuring apparatus of the present invention.
Fig. 9 is a diagram illustrating an embodiment of a detecting tab cassette.
Fig. 10 is a diagram illustrating an embodiment of a color reagent dropping device.

Best Mode for Carrying Out the Invention

(Color development reaction)

The formaldehyde concentration measuring method of the present invention is based on the following color development reaction of an aqueous solution of 4-amino-3-hydrazino- mercapto-1,2,4-triazole (AHMT) with formaldehyde under an alkaline condition:

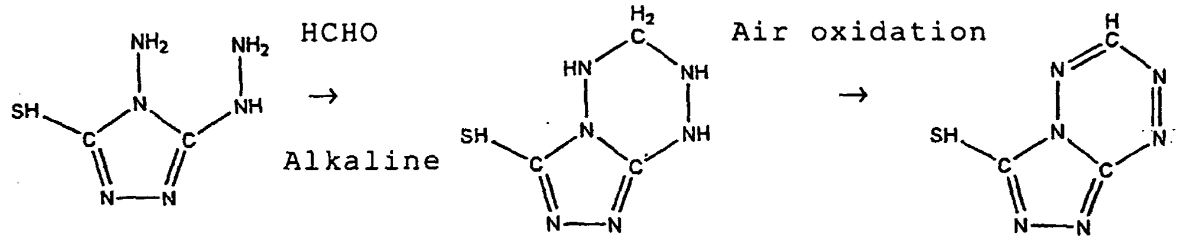


AHMT                Red material

As indicated by the foregoing formula, the present invention is characterized in that an intermediate produced by the reaction of AHMT with formaldehyde under an alkaline condition is subjected to air oxidation to undergo color development.

In the present invention, the aforementioned reaction is a substantial solution reaction that occurs in a color reagent solution retained in a filter wet with a color reagent. Therefore, the color development proceeds with air oxidation caused by the contact of the surface of the solution with air. Accordingly, the color development step requires no addition of an oxidizing agent such as $KIO_4$.

The term "wet" as used herein is meant to indicate that the color reagent fills the gap between the fibers constituting the filter so that the color reagent is retained in the filter to form a liquid layer integrally with the filter.

In accordance with the method of the present invention, the color reagent retained in the filter and the gas to be detected are brought into continuous contact with each other for a period of time until measurable color development occurs. The time during which the filter and the gas to be detected are brought into contact with each other, i.e., measuring time is within the range of from 180 to 300 seconds if the concentration of formaldehyde in the gas to be detected ranges from 0.04 to 1 ppm. In the case where the formaldehyde concentration is higher, shorter measuring time may be employed.

(Color reagent)

In the present invention, the color reagent is an alkaline aqueous solution of AHMT containing AHMT and 1N or more, preferably 2N or more of a free base. Since AHMT can be difficultly dissolved in water, the alkaline aqueous solution of AHMT is prepared by dissolving AHMT in an aqueous solution of acid to prepare an acidic aqueous solution of AHMT, neutralizing the acid in the acidic aqueous solution of AHMT, and then adding an alkaline aqueous solution to the aqueous solution of AHMT in an amount such that the aforementioned free base is allowed to occur.

The acidic aqueous solution of AHMT is an aqueous solution containing from 0.1 to 1 N of a free acid. As the acid for use in the preparation of the acidic aqueous solution of AHMT there is used a nonoxidizing acid, preferably hydrochloric acid. The concentration of AHMT is normally from 0.1 to 0.5% by weight but is not specifically limited and may be properly predetermined according to the concentration of formaldehyde to be measured. The acidic aqueous solution of AHMT may be stably stored in a glass or plastic vessel at room temperature.

For the alkaline aqueous solution, an aqueous solution containing from 2 to 10 N of a free base is prepared. The aqueous solution is used as it is or diluted as necessary. As an alkaline source there is preferably used a hydroxide of strongly basic alkaline metal such as KOH and NaOH. The alkaline aqueous solution may be stored in a plastic vessel at room temperature.

The color reagent may be prepared by mixing the aforementioned acidic aqueous solution of AHMT with the aforementioned alkaline aqueous solution in a vessel or by separately dropping the two aqueous solutions onto a filter where they are then mixed. The color reagent obtained by mixing the acidic aqueous solution of AHMT with the alkaline aqueous solution is optically labile itself. Therefore, the color reagent is preferably prepared by mixing the acidic aqueous solution of AHTM with the alkaline aqueous solution shortly before use or on the filter.

The amount of the color reagent with which the filter is wet may be such that the reagent occurs as a solution on the filter to prevent the filter from being dried during the measurement, i.e., passage of the gas to be detected. The amount of the color reagent is properly predetermined according to the solution storage properties and the shape of the filter, the expected concentration of formaldehyde in the gas to be detected, etc.

(Filter)

In the present invention, the material and shape of the filter are not specifically limited so far as it is made of a material which, when wet with the aforementioned color reagent, can retain the color reagent therein in a sufficient amount, gives no background color development and at least is fast to an alkaline solution having a concentration of 2N or more. In order to optically measure the degree of color development using a transmitted light, it is required that the filter material be sufficiently permeable to light.

Preferred examples of the filter to be used in the present invention include glass filter paper, silica fiber filter paper, and quartz filter paper. On the other hand, the use of a filter comprising cellulose fibers is preferably avoided because when wet with a color reagent, such a filter gives background color development in a relatively short period of time.

The filter may be in arbitrary shape such as circle and rectangle depending on the measuring apparatus used. In order to retain the color reagent in a sufficient amount, several sheets of filters may be used in laminated form to obtain good results.

As a method of wetting the filter with the color reagent there may be properly used a method which comprises dropping the acidic aqueous solution of AHMT and the alkaline aqueous solution, respectively, directly onto the filter using a pipette such as PIPETMAN, a method which comprises dropping an aqueous mixture of the acidic aqueous solution of AHMT and the alkaline aqueous solution on the filter using a pipette or the like.

(Contact of gas to be detected with filter)

In the present invention, the gas to be detected is not specifically limited so far as it is a gas which may contain formaldehyde. Specific examples of the gas to be detected include indoor air which is expected to contain formaldehyde in a low concentration, air in a fumigation chamber containing formaldehyde in a high concentration or its surroundings, and soil air. Other examples of the gas to be detected include air or nitrogen gas collected after bubbling sea water in culture fish preserve, factory waste water or other liquids which are likely to have formaldehyde dissolved therein, and gas generated by heating a solid material such as wall material.

By introducing the gas to be detected into a detection gas flow path having a filter provided therein at a predetermined rate using a constant rate pump, the gas to be detected and the filter wet with the aforementioned color reagent are brought into contact with each other. In order to bring the gas to be detected and the filter into contact with each other, any of a method which comprises allowing the gas to be detected to flow in parallel to the surface of the filter, a method which comprises allowing the gas to be detected to collide with the surface of the filter at a certain angle and a method which comprises allowing the gas to be detected to pass through the filter may be employed. Taking into account the diffusion of formaldehyde in the color reagent from the gas to be detected and the mixing of formaldehyde with the color reagent, the method which comprises allowing the gas to be detected to collide with the surface of the filter at a certain angle is preferably employed.

(Measurement of color tone or degree of color development)

When the gas to be detected and the color reagent retained in the filter are brought into contact with each other in a manner as mentioned above, spots having a color ranging from violet to red with a maximum absorption wavelength of 550 nm appear on the surface of the filter if the gas to be detected contains formaldehyde. By visually measuring the color tone of the spots or optically measuring the degree of color development of the spots and then comparing these measurements with a color tone sample or calibration curve of degree of color development previously prepared using a standard gas having a known formaldehyde concentration, the concentration of formaldehyde in the gas to be detected is determined.

As the method of optically measuring the degree of color development there may be used a method which comprises measuring the change (% response) of intensity of light reflected by the spots when irradiated with light, i. e., degree of color development. As a light source to be used in this method there may be used a PIN type photodiode with a light-emitting element (LED) used as an element for receiving reflected light.

(Measuring apparatus)

The formaldehyde concentration measuring apparatus of the present invention and its accessories will be further described in connection with Figs. 6 to 10. In these drawings, like numerals are used for like components.

An embodiment of the contact of the gas to be detected with the filter wet with the color reagent, which is an essence of the formaldehyde concentration measuring apparatus of the present invention, is shown in Fig. 6. Between a detection gas inlet 12 of a main body 1 and a detection gas outlet 13 to be connected to an exterior suction pump is

formed a detection gas flow path 11. A detecting tab 2 is detachably mounted on the main body 1 in such an arrangement that a filter 21 mounted on the detecting tab 2 is exposed to the interior of the detection gas flow path 11. In this arrangement, the gas to be detected flowing through the detection gas flow path 11 and the filter 21 wet with the color reagent can be brought into contact with each other.

Fig. 6(a) illustrates an embodiment in which the gas to be detected flows substantially in parallel to the surface of the filter 21 to come in contact with the color reagent, Fig. 6(b) illustrates an embodiment in which the gas to be detected flows through the filter 21 to come in contact with the color reagent and Fig. 6(c) illustrates an embodiment in which the gas to be detected is allowed to collide with the surface of the filter 21 to come in contact with the color reagent.

Fig. 6 is only illustrative and the embodiment of contact of the gas to be detected with the filter 21 is not limited to those shown in Fig. 6. Any embodiments other than shown may be employed so far as the gas to be detected and the filter 21 can be brought into contact with each other.

As shown in Fig. 7, the detecting tab 2 is formed by a filter 21, a frame 22 in which the filter 21 extends and a filter press 23 for fixing the filter 21 to the frame 22. The area in the frame 22 where the filter 21 extends may be in any shape such as circle (as shown in Fig. 7(a)) and rectangle (as shown in Fig. 7(b)).

In a preferred embodiment shown in Fig. 8, the detecting tab 2 is formed by a frame 22 comprising the extension area of the filter 21 in a part of a tabular or rectangular flat plate shown in Fig. 7(b). In this arrangement, the detecting tab 21 can be inserted into a slit 15 provided on the side of the main body 1 and then pressed into the interior of the main body 1 along a rail 16 provided inside the main body 1 so that the filter 21 of the detecting tab 2 can be mounted in the main body 1 at a predetermined position.

More preferably, as shown in Fig. 9, a cassette 25 in which the detecting tab 2 is received can be applied on the slit 15 provided in the main body 1 so that the detecting tab 2 can be mounted on the main body 1 without exposing the surface of the filter 21 wet with the color reagent to natural light.

The cassette 25 is a housing having a front cover 26 provided at the front thereof which opens vertically. The cassette 25 has two or more rotatable pin rollers 27 provided on the respective inner side thereof for taking the detecting tab 2 in and out of the cassette 25. These pin rollers 27 are received in a groove 24 provided on the side of the detecting tab 2 so that the detecting tab 2 can be easily taken in and out of the cassette 25. The cassette 25 also has an insert hole 28 provided above the filter 21 of the detecting tab 2 for mounting a color reagent dropping device 4. The cassette 25 further has a glass sheet provided under the filter 21 of the detecting tab 2. Though not shown, if the detecting tab 2 is mounted in contact with any surface of the main body 1, the detecting tab 2 may be threaded in or screwed to the main body 1 at the mounting position.

The material of the main body 1 and its interior structure may be either metal or plastic. The detecting tab 2, too, may be made of either metal or plastic except the filter 21. However, the interior of the main body and parts disposed inside the main body except the filter 21 are painted black so that the reflection of light by areas other than the surface of the filter 21 can be prevented.

As shown in Fig. 8, the apparatus according to a preferred embodiment comprises an optical measurement system for optically measuring the degree of color development of the surface of the filter 21 and displaying the measurements as absolute values of formaldehyde concentration. The optical measurement system comprises a light-emitting element (LED) 31 for irradiating the surface of the filter 21 with light, a light-receiving element (PIN type photodiode) 32 for receiving light reflected by the surface of the filter 21 and a liquid crystal display 33 for displaying the change of intensity (% response) of reflected light received by the light-receiving element 32, i.e., degree of color development as calculated in terms of formaldehyde concentration.

The change of reflection intensity (% response) is calculated from the output voltage (V) of the light-receiving element before, during and after the passage of the gas to be detected by the following equation:

$$\text{Response (\% output)} = (V_0 - V_1) \times 100/V_0$$

wherein $V_0$ represents the output voltage before introduction of gas to be detected; $V_1$ represents the output voltage during or after introduction of gas to be detected

The change of the output voltage corresponds to the change of reflection intensity (% response), i.e., degree of color development of the surface of the filter.

In Fig. 8, the portion of the main body below the detecting tab 2 is partitioned to form an electronic parts chamber. Though no shown, the electronic parts chamber receives electronic parts such as CPU, RAM, ROM, timer and battery necessary for displaying the voltage change measured by the light-receiving element 32 on a display 33 as a formaldehyde concentration.

In another preferred embodiment, the apparatus comprises a color reagent dropping device 4 incorporated therein as a set. The color reagent dropping device 4 is formed by a set of at least two graduated reagent feed pipes

41a,b and a reagent mixing pipe 44. The reagent feed pipe 41ab is detachably mounted on an upper cover 47 of the reagent mixing pipe 44. The reagent feed pipes 41 are each formed by a so-called graduated dropper composed of a transparent graduated hard pipe portion 42 and a soft cover portion 43 which can deform when externally pressed. The cover portion 43 may be an ordinary soft rubber cap but is preferably a bellows as shown. One of the reagent feed pipes 41 is for the acidic aqueous solution of AHMT and the other is for the alkaline aqueous solution. A syringe may be used instead of the aforementioned dropper.

On the other hand, the reagent mixing pipe 44 is formed by a hard pipe portion 45 and a soft pipe portion 46 which can partially deform when externally pressed. The lower end portion 48 of the reagent mixing pipe 44 is narrow-necked and opened similarly to the dropper. The lower end portion 48 is detachably fitted in an insert hole 28 positioned above the filter 21 of the detecting tab 2 of the aforementioned cassette 25. The soft pipe portion 46 of the reagent mixing pipe 44, too, is preferably formed by a bellows.

An example of the procedure of measuring the concentration of formaldehyde in the gas to be detected using the aforementioned measuring apparatus will be described below.

(1) An aqueous solution of hydrochloric acid containing AHMT and an alkaline aqueous solution in their reagent storage vessels are each measured out in graduated reagent feed pipes 41a,b in a predetermined amount. The graduated reagent feed pipes 41a,b are then mounted on the upper cover 47 of the reagent mixing pipe 44 at a predetermined position.

(2) The color reagent dropping device 4 is fitted in the insert hole 28 of the cassette 25 having the detecting tab 2 received therein.

(3) The soft cover portion of the reagent feed pipes 41a,b each are pressed to pump the aqueous solution of hydrochloric acid containing AHMT and the alkaline aqueous solution into the reagent mixing pipe 44.

(4) The soft pipe portion 46 of the reagent mixing pipe 44 is externally pressed to drop the color reagent thus prepared onto the filter 21 of the detecting tab 2 so that the filter 21 is wet.

(5) The cassette 25 having the detecting tab 2 received therein or the detecting tab 2 which has been withdrawn from the cassette 25 is inserted into the slit 15 of the main body 1 so that the detecting tab 2 is mounted on the main body 1 at a predetermined position and the surface of the filter 21 is exposed to the detection gas flow path 11.

(6) The suction pump is started to introduce the gas to be detected into the detection gas flow path 11 in the main body 1 at a predetermined rate for a predetermined period of time.

(7) The optical measurement system is switched ON to measure the degree of color development of the surface of the filter 21 and allow the display to display the formaldehyde concentration.

(8) In the case where the optical measurement system is not used, the detecting tab 2 is withdrawn from the main body 1 and then visually confirmed for the degree of color development of the surface of the filter 21. The measurements are then compared with that of a standard sample to determine the formaldehyde concentration.

Instead of the apparatus of the present invention, Type FP-85 multigas finder, which is a commercially available portable formaldehyde meter produced by RIKEN KEIKI CO., LTD., may be used. The detecting tab of the present invention can be attached to the main body of the portable formaldehyde meter to measure the concentration of formaldehyde in the gas to be detected.

The present invention will be further described in the following examples, reference examples and comparison examples.

Examples

Reference Example 1:

Selectivity of AHMT reagent; effect of various aldehyde compounds

Aldehyde compounds which are likely to occur in the gas to be detected: The color development of acetaldehyde and gluraraldehyde with an AHMT reagent was confirmed.

0.25 g of AHMT (Ca. No.011-08331; for determination of aldehyde, produced by Wako Pure Chemical Industries, Ltd.) was dissolved in 50 ml of a 1N hydrochloric acid (prepared by diluting 10 ml of guaranteed 37% HCl solution produced by Wako Pure Chemical Industries, Ltd. with distilled water to make 120 ml) to prepare a 0.5% AHMT solution.

23 g of potassium hydroxide (first grade palletized potassium hydroxide; Ca. No. 165-03865, produced by Wako Pure Chemical Industries, Ltd.) was diluted with distilled water to make 100 ml. Thus, a 23% (about 4.1N) solution of KOH was prepared.

To 0.75 g of potassium periodate was added 100 g of a 0.2N KOH (prepared by diluting 10 ml of the aforementioned alkaline solution with distilled water to make 205 ml) to prepare an oxidizing agent solution.

Formaldehyde, acetaldehyde and glutaraldehyde (guaranteed reagents produced by Wako Pure Chemical Industries, Ltd. ) were each dissolved in and diluted with distilled water to prepare test solutions having a known concentration. These test solutions were then each measured out in a test tube in an amount of 2 ml. To each of these test solutions were then added 2 ml of the aforementioned KOH solution and AHMT solution. The mixture was stirred, and then allowed to stand at room temperature for 15 minutes. Subsequently, to each of these test solutions was added 2 ml of the oxidizing agent solution. The mixtures were each lightly shaken until bubbles were no longer generated, and then measured for absorbance at a wavelength of 550 nm.
The results of measurement are shown in Fig. 1.
As can be seen in Fig. 1, the color development reaction of AHMT is a reaction characteristic of formaldehyde and the absorbance at a wavelength of 550 nm is proportional to the concentration of formaldehyde over a wide range of formaldehyde concentration.

Reference Example 2:

Selectivity of AHMT reagent; effect of various volatile organic compounds

The color development of volatile organic compounds (VOC) set forth in Table 1 other than aldehyde compounds which are likely to occur in the gas to be detected was confirmed according to a standard AHMT method similar to that of Example 2. Since benzene, toluene and xylene are insoluble in water, they were dissolved in and diluted with ethanol to prepare test solutions. The VOC concentration of these test solutions were all 1,000 ppm.
The results of measurement of absorbance are set forth in Table 1.

Table 1

| Effect of VOC other than aldehyde and other compounds by AHMT method | |
|---|---|
| Kind of VOC | Absorbance (550 nm) |
| Ethanol | 0.013 |
| Methanol | 0.005 |
| Isopropyl alcohol | 0.005 |
| Benzene | 0.006 |
| Toluene | 0.002 |
| Xylene | 0.003 |
| Acetone | 0.009 |
| Acetic acid | 0.003 |
| Hydrochloric acid | 0.005 |
| Ammonia | 0.004 |
| * All these compounds had a concentration of 1,000 ppm | |

As can be seen in Table 1, none of these VOC's undergoes color development even if they occur in a concentration as high as 1,000 ppm.
The results of Reference Examples 1 and 2 demonstrate that the color development by AHMT is characteristic of formaldehyde and the method according to the present invention involving the use of AHMT as a color reagent provides a very high formaldehyde selectivity.

Example 1

(Color reagent)

Preparation of acidic aqueous solution of AHMT

0.5 g of amino-3-hydrazino-5-mercapto-1,2,4-1,2,4 -triazole (Ca. No. 011-08331 for determination of aldehyde; produced by Wako Pure Chemical Industries, Ltd.) was dissolved in 50 ml of a 3N hydrochloric acid to prepare a 1% solution.

Preparation of alkaline solution

23 g of potassium hydroxide (first grade palletized potassium hydroxide; Ca. No. 165-03865, produced by Wako Pure Chemical Industries, Ltd.) was diluted with distilled water to make 100 ml. Thus, a 23% (about 4.1N) solution of KOH was prepared.

(Gas to be detected)

As gases to be measured there were used gases to be detected having various formaldehyde concentrations prepared by diluting a formaldehyde solution (guaranteed 37% solution produced by Wako Pure Chemical Industries, Ltd.) with nitrogen gas using a correcting gas preparation device (Type PD-1B permeator, produced by GASTEC CORPORATION).

(Measuring instrument)

A modification of a commercially available measuring instrument (Type FP-85 multi gas finder; produced by RIKEN KEIKI CO., LTD.) was used. This measuring instrument has a light-emitting element (LED) and a light-receiving element (PIN type photodiode) provided inside the main body in such a manner that color-developed spots on the filter of the detecting tab can be detected.

(Measurement of formaldehyde concentration)

To the detecting tab was attached a glass filter paper having a diameter of 5 mmϕ. Onto the filter was then dropped 40 μl of a color reagent prepared by mixing the previously prepared hydrochloric acid solution of AHMT and KOH solution at a volume ratio of 1 : 1 through a micropipette so that the filter was wet. The filter was then mounted in the aforementioned measuring instrument at a predetermined position.

A suction pump was then started to introduce gases to be detected (formaldehyde concentration: 0, 0.04, 0.08, 0.5, 1 ppm) into the measuring instrument through a sampling chamber at a constant flow rate of 100 ml/min adjusted by a flow rate adjusting valve so that they were brought into contact with the filter for a predetermined period of time (60, 180, 300 seconds).

The color-developed spots on the filter were then irradiated with light emitted by the light-emitting element. The percent response of the output voltage V of the light-receiving element before, during and after the passage of the gas to be detected were displayed on the display and recorded.

The percent response with respect to sampling time (contact time of gas to be detected with filter) is shown in Fig. 2, the percent response with respect to formaldehyde concentration (0 to 1 ppm) is shown in Fig. 3, and the percent response with respect to formaldehyde concentration (0 to 4 ppm) is shown in Fig. 4.

As can be seen in Fig. 3, when the gas to be detected is allowed to pass for 180 to 300 seconds, a significant correlation is established within a range of from 0.04 to 1 ppm. These results demonstrate that the formaldehyde concentration of 0.08 ppm or less, which is WHO's environmental standard, can be measured in a measuring time of from 180 to 300 seconds.

Fig. 4 demonstrates that under the aforementioned measuring conditions the color development undergoes no change within a formaldehyde concentration range of about 1 ppm or more. These results demonstrate that the concentration of AHMT in the color reagent, the flow rate of the gas to be detected, the passage time of the gas to be detected, the color measurement wavelength, etc. can be properly selected and optimized by the concentration (to be measured) of formaldehyde in the gas to be detected. In some detail, the measurement of formaldehyde concentration can be made without changing the concentration of AHMT in the color reagent, etc. for different formaldehyde concentrations, i.e., very low formaldehyde concentration (1 ppm or less), middle formaldehyde concentration (about 10 ppm), high formaldehyde concentration (10 ppm or more). In this case, measurement can be made in several minutes. Thus, formaldehyde concentration can be measured simply in a short period of time.

Example 2: Selection of filter

The background color development of filters made of various materials wet with the color reagent was evaluated. For evaluation, the filter described below was cut into a piece having a diameter of 5 mmϕ which was then attached to the same detecting tab as used in Example 1. The filter was wet with the hydrochloric acid solution of AHMT and KOH solution prepared in Example 1 separately or in admixture, and then mounted on the aforementioned measuring instrument at a predetermined position. In this arrangement, a gas free of formaldehyde was then taken into the measuring instrument to come in contact with the surface of the filter.

(Evaluation filter)

Glass filter paper (GA-55, produced by ADVANTECH CO., LTD.; 21 mmϕ diameter x 0.21 mm thickness; diameter of retained particles: 0. 6 μm), silica fiber filter paper (QR-100, produced by ADVANTECH CO., LTD.; 21 mmϕ diameter x 0.38 mm thickness), quartz filter paper (QM-A, produced by Whatman Inc.; 203 mm width x 254 mm length x 0.45 mm thickness), cellulose filter paper (No. 1, produced by ADVANTECH CO., LTD.; 55 mmϕ diameter x 0.2 mm thickness; diameter of retained particles: 6 μm), cotton filter paper, sulfate paper, polystyrene filter paper, polypropylene filter paper (PS-103, produced by Mitsui Chemicals, Inc.; 40 mm length x 10 mm x 0. 18 mm thickness) , polyester filter paper (PAC34-05, produced by Hikari Co., Ltd.; 300 mm width x 450 mm length x 0.5 mm thickness), polycarbonate filter paper, acrylic resin filter paper, vinyl chloride filter paper (EB-435-5, produced by Hikari Co., Ltd.; 300 mm width x 450 mm length x 0.5 mm thickness), polyvinyl formal filter paper (D-4200, produced by Kanebo, Ltd. (Muromachi, Inc.); 50 mmsq; diameter of retained particles (average pore diameter) : 80 μm), paraffin filter paper (WI54952, produced by American National Can; 40 mm width x 1,250 mm length), agar gel (016-15812 (guaranteed), produced by Wako Pure Chemical Industries, Ltd.; prepared by dissolving 15 g of agar-agar in 1,000 ml of distilled water, heating the solution to 120° for 15 minutes, and then putting the solution in a dish (90 mmϕ diameter x 15 mm height) where it is then cooled), TLC (cellulose) (produced by Whatman Inc.), TLC (silica gel) (Silica Gel 60 $F_{254}$, produced by Whatman Inc.; 20 mmsq x 0.2 mm thickness), TLC (reversed phase) (RP-18 $F2_{545}$, produced by Whatman Inc.; 20 mm width x 21 mm length x 1.2 mm thickness), teflon (TOMB09001, produced by NICHIAS Corporation; 300 mm width x 10 m length x 0.05 mm thickness), polyflon filter (PF-100, produced by ADVANTECH CO., LTD.; 55 mmϕ diameter x 1 mm thickness; diameter of retained particles: 10 μm), silicon, ceramic filter, pumice stone, cellulose acetate (C300A013, produced by ADVANTECH CO., LTD.; 13 mmϕ diameter x 0.135 mm thickness; diameter of retained particles (pore diameter) : 3 μm), mixed cellulose ester (A500A013, produced by ADVANTECH CO., LTD.; 13 mmϕ diameter x 0.16 mm thickness; diameter of retained particles (pore diameter): 5 μm), cellulose nitrate (A080A025, produced by ADVANTECH CO., LTD.; 25 mmϕ diameter; diameter of retained particles (pore diameter): 0.8 μm)

Fig. 5 shows the degree of color development (% response) on the background (formaldehyde concentration: 0 ppm) of the cellulose filter and the glass filter with respect to sampling time and Table 2 shows the results of evaluation of other filters.

Table 2

| Evaluation of the degree of background of filters made of various materials | | |
|---|---|---|
| Filter | Blank color development* | Remarks |
| Glass filter | G | Glass is the most suitable material |
| Silica fiber filter paper | G | No blank color development occurs, but slight yellowing occurs |
| Quartz filter paper | G | |
| Cellulose (filter paper, etc.) | P | |
| Cotton | P | |
| Sulfate paper | P | |
| Polystyrene | P | |
| Polypropylene | P | |
| Polyester | P | |
| Polycarbonate | P | |
| Acrylic resin | P | |
| Vinyl chloride | P | |
| Polyvinyl formal | P | |
| Paraffin | P | |
| Agar gel | P | |
| TLC (cellulose) | P | |

* G (good): No color development occurs; F (fair): Slight color development occurs; P (poor): Color development occurs

Table 2 (continued)

| Evaluation of the degree of background of filters made of various materials | | |
|---|---|---|
| Filter | Blank color development* | Remarks |
| TLC (silica gel) | P | |
| TLC (reversed phase) | P | |
| ABS | F | |
| Polyester | F | |
| Teflon | F | |
| Polyflon filter | F | Not hygroscopic, so unusable |
| Silicon | F | |
| Ceramic | F | Color development occurs if a reagent is present on the surface but no longer occurs if water is absorbed |
| Pumice stone | G | No color development occurs with formaldehyde |
| Cellulose acetate | G | " |
| Mixed cellulose ester | G (discolored to brown) | " |
| Cellulose nitrate | G (discolored to brown) | " |

* G (good): No color development occurs; F (fair): Slight color development occurs; P (poor): Color development occurs

Fig. 5 demonstrates that a cellulose filter shows a rise of background color development (formaldehyde concentration: 0 ppm) with time. In the case where a glass filter is used, the background undergoes little color development even after 10 minutes, demonstrating that sufficiently significant color development occurs in a short period of time even if the concentration of formaldehyde is as low as 0.08 ppm.

Industrial Applicability

In accordance with the method of measuring the formaldehyde concentration of the present invention, AHMT is used as a color reagent, making it possible to provide an extremely high selectivity of formaldehyde without being subject to the effect of aldehyde compounds and volatile organic compounds (VOC) coexisting in a gas to be detected as described in the aforementioned reference examples. The detection sensitivity is as extremely high as 0.04 to 1 ppm as described in Example 1. The measuring time is as extremely short as 180 to 300 seconds as compared with the prior art methods.

Further, the use of the measuring apparatus of the present invention makes it possible to execute the aforementioned method in an extremely simplified manner.

The present invention provides a method useful for the environmental analysis of measuring formaldehyde concentration at a high sensitivity with an extremely high selectivity of formaldehyde in an extremely short period of time and a measuring apparatus for use in the measuring method and thus has an extremely great significance in the art of environment.

## Claims

1. A method of measuring the concentration of formaldehyde in a gas, **characterized in that** the concentration of formaldehyde in a gas to be detected is determined on the basis of the tone or degree of the color of a filter which is wet with a color reagent comprising an alkaline aqueous solution of 4-amino-3-hydrazino- mercapto-1,2,4-triazole (AHMT) and gives no background color development due to wetting with the color reagent by allowing the color reagent and the gas to be detected to come in contact with each other on or through the filter so that formaldehyde in the gas to be detected acts on the filter.

2. The method according to Claim 1, comprising at least

(a) a step of dissolving an acidic aqueous AHMT-solution obtained by dissolving 4-amino-3-hydrazino-mercapto-1,2,4-triazole (AHMT) in an acidic aqueous solution and an alkaline metal hydroxide in water and mixing the solution with an alkaline aqueous solution to prepare a color reagent,
(b) a step of wetting the filter with the color reagent,
(c) a step of introducing the gas to be detected onto or into the filter to allow the gas to be detected and the color reagent to come in contact with each other and
(e) a step of measuring the tone or degree of color of the filter.

**3.** The method according to Claim 1 or 2, wherein the filter is selected from the group consisting of glass filter paper, silica fiber filter paper and quartz filter paper.

**4.** An apparatus of measuring the concentration of formaldehyde in a gas comprising
a gas flow path formed between a detection gas inlet and a detection gas outlet connected to a suction pump and a detection tab detachably mounted in the gas flow path at a predetermined position,
**characterized in that** the detection tab comprises a filter mounted thereon, said filter being wet with a color reagent comprising an alkaline aqueous solution of 4-amino-3-hydrazino-mercapto-1,2,4-triazole(AHMT) and giving no background color development due to wetting with the color reagent, so that when the color reagent and the gas to be detected are brought into contact with each other, the filter wet with the color reagent undergoes color development with formaldehyde in the gas to be detected.

**5.** The measuring apparatus according to Claim 4, wherein the detecting tab is formed by a filter, a frame and a filter press and
the filter is selected from the group consisting of glass filter paper, silica fiber filter paper and quartz filter paper, extends inside the frame without clearance and is fixed by the filter press.

**6.** The measuring apparatus according to Claim 4 or 5, wherein the detecting tab is tabular and is disposed in the gas flow path at a predetermined position by being inserted into a slit provided in the main body.

**7.** The measuring apparatus according to Claim 6, wherein the tabular detecting tab is disposed in the gas flow path at a predetermined position by being received in a cassette which is mounted in a slit provided in the main body.

**8.** The measuring apparatus according to any one of Claims 4 to 7, wherein there are further provided a light-emitting element for irradiating at least the surface of the filter with light, a light-receiving element for catching the light reflected by the surface of the filter and a display,
the change (% response) in the intensity of light reflected by the surface of the filter from before to after contact with the gas to be detected is measured by the light-emitting element and
the formaldehyde concentration calculated from the degree of color development of the surface of the filter based on the measurements is displayed on the display.

**9.** The apparatus according to any one of Claims 4 to 8, wherein there are provided a plurality of reagent feed pipes and reagent mixing pipes,
the reagent feed pipes each comprise a graduated transparent pipe portion and a soft cover portion which can deform when pressed externally and are detachably mounted on the top of the reagent mixing pipes and the reagent mixing pipes each further comprise a color reagent dropping device partially having a soft pipe portion deformable by external pressure for dropping a predetermined amount of the color reagent onto the filter of the detecting tab.

Fig. 1

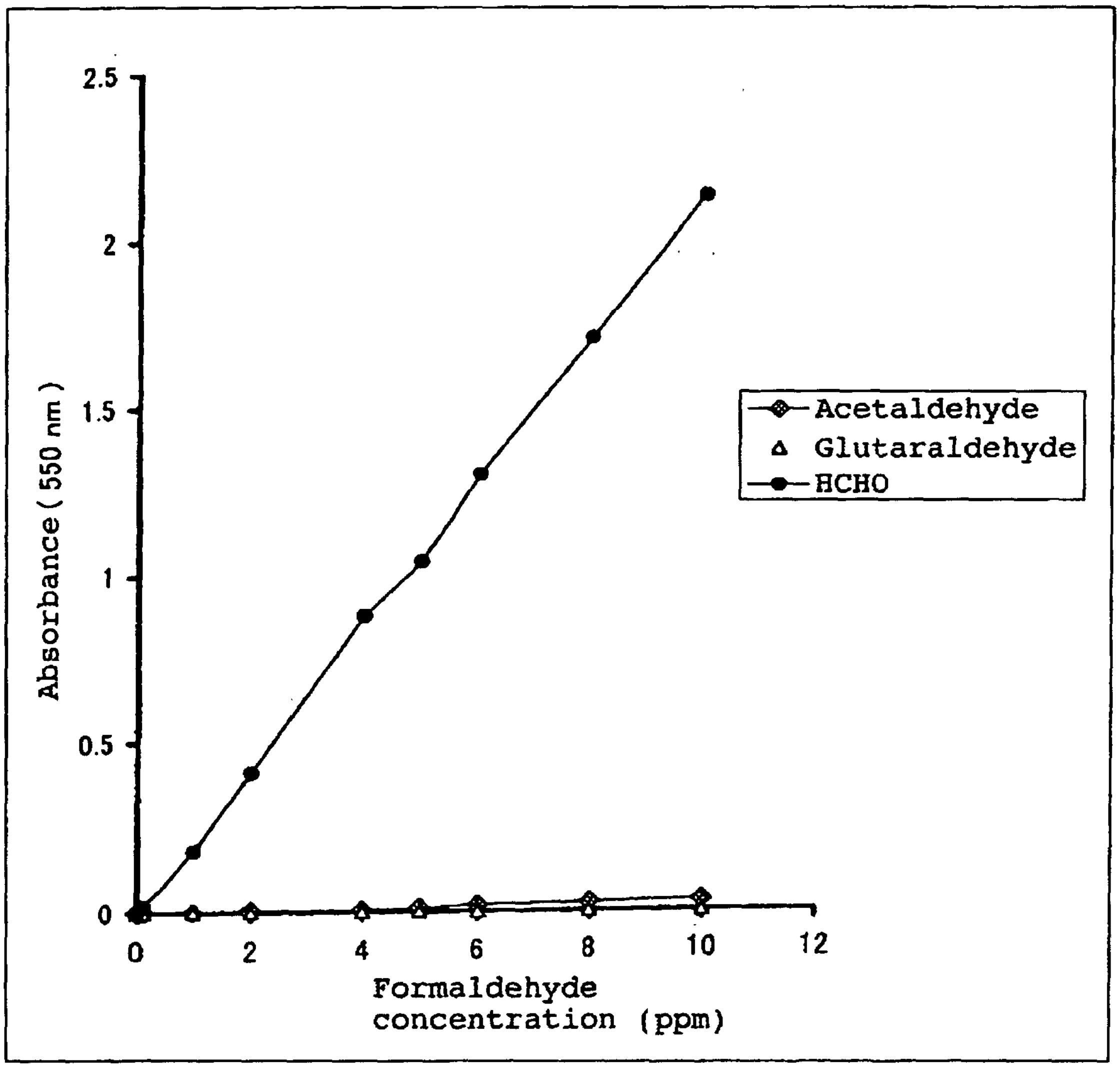
2.5
2
1.5
1
0.5
0
Absorbance ( 550 nm )
0
2
4
6
8
10
12
Formaldehyde
concentration (ppm)
Acetaldehyde
Glutaraldehyde
HCHO

Fig. 2

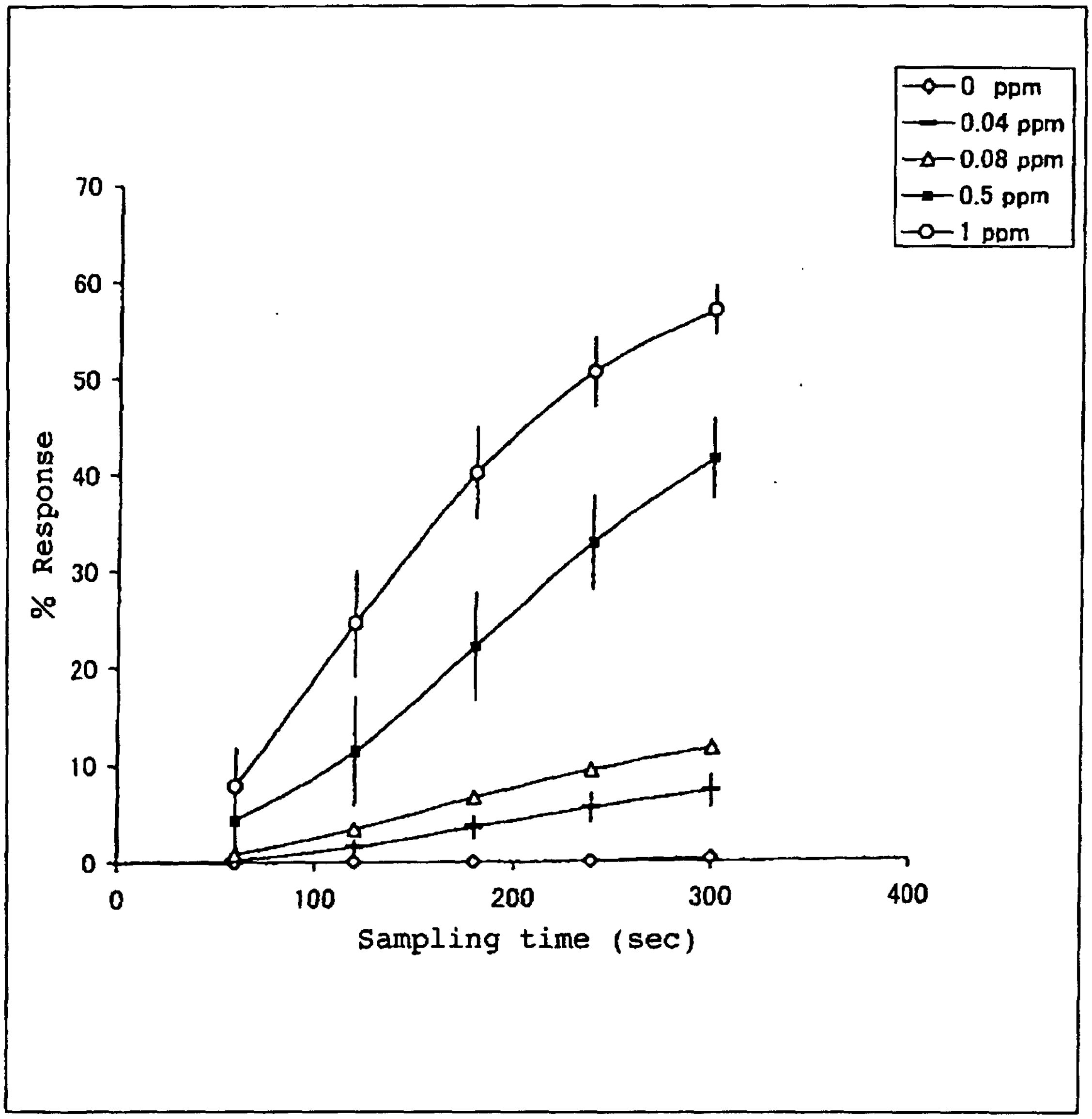
0 ppm
0.04 ppm
0.08 ppm
0.5 ppm
1 ppm
70
60
50
40
30
20
10
0
% Response
0
100
200
300
400
Sampling time (sec)

Fig. 3

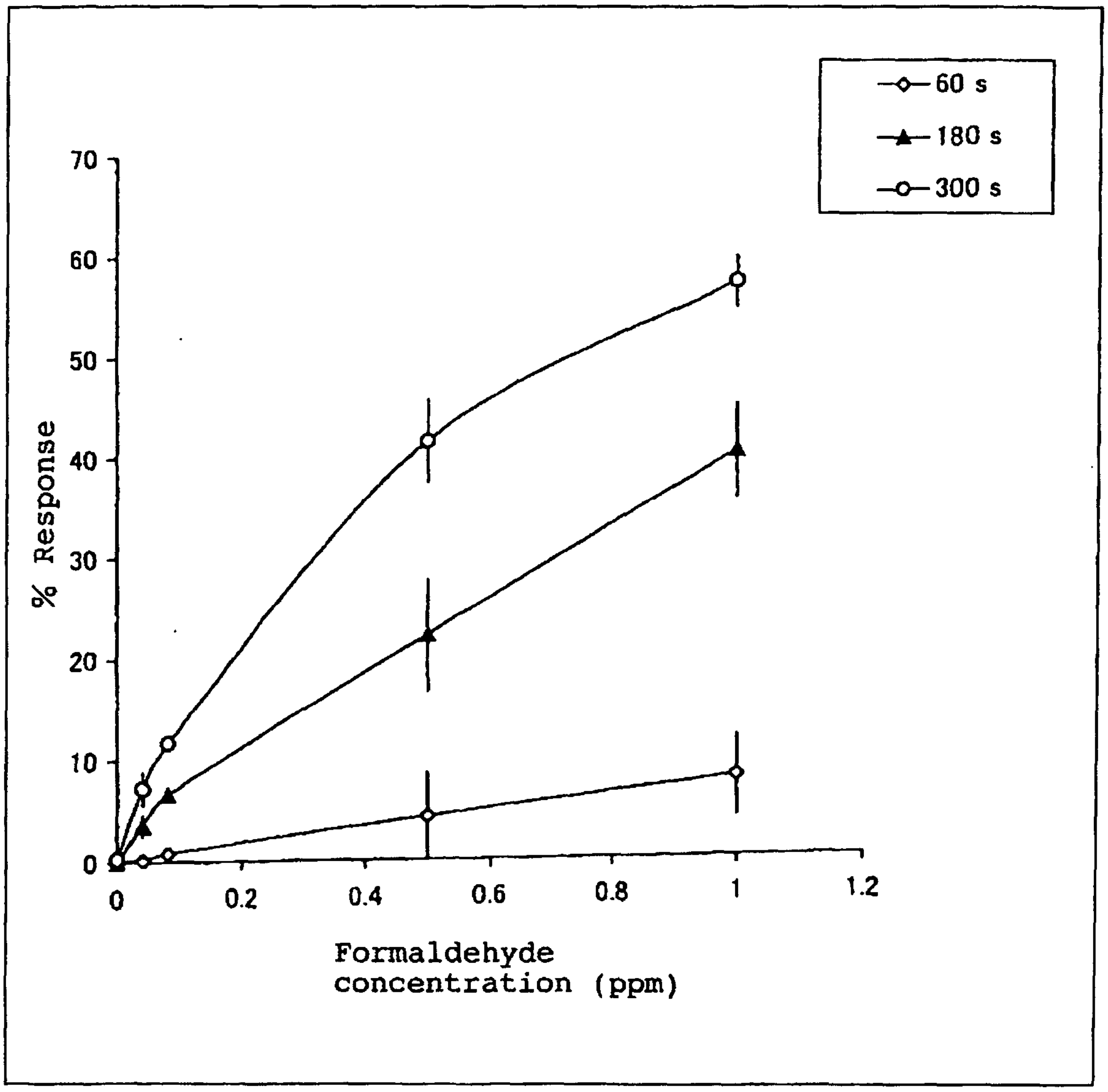
60 s
180 s
300 s
70
60
50
40
30
20
10
0
% Response
0
0.2
0.4
0.6
0.8
1
1.2
Formaldehyde concentration (ppm)

Fig. 4

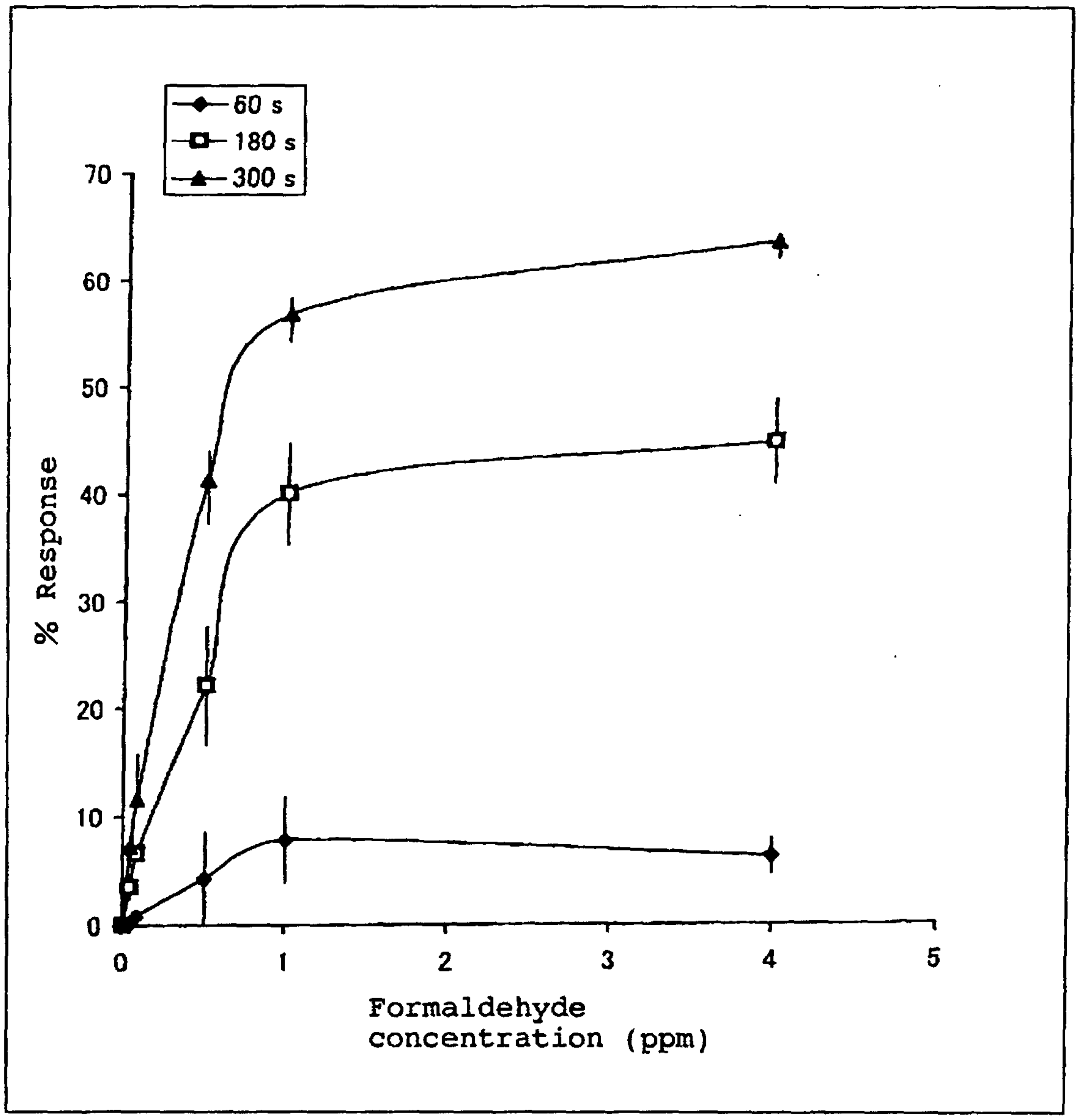
60 s
180 s
300 s
% Response
0
10
20
30
40
50
60
70
0
1
2
3
4
5
Formaldehyde
concentration (ppm)

Fig. 5

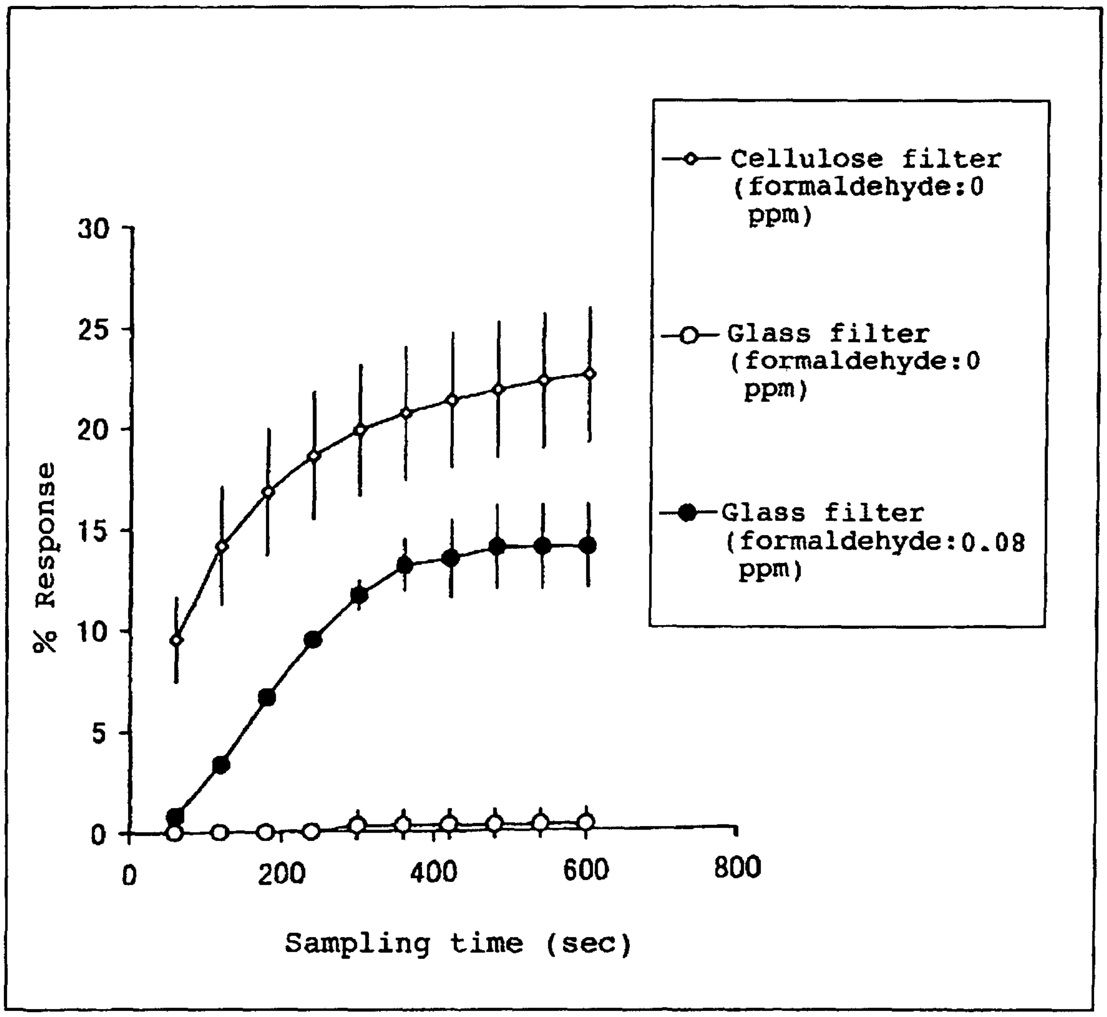
Cellulose filter (formaldehyde:0 ppm)
Glass filter (formaldehyde:0 ppm)
Glass filter (formaldehyde:0.08 ppm)
% Response
30
25
20
15
10
5
0
0
200
400
600
800
Sampling time (sec)

Fig. 6

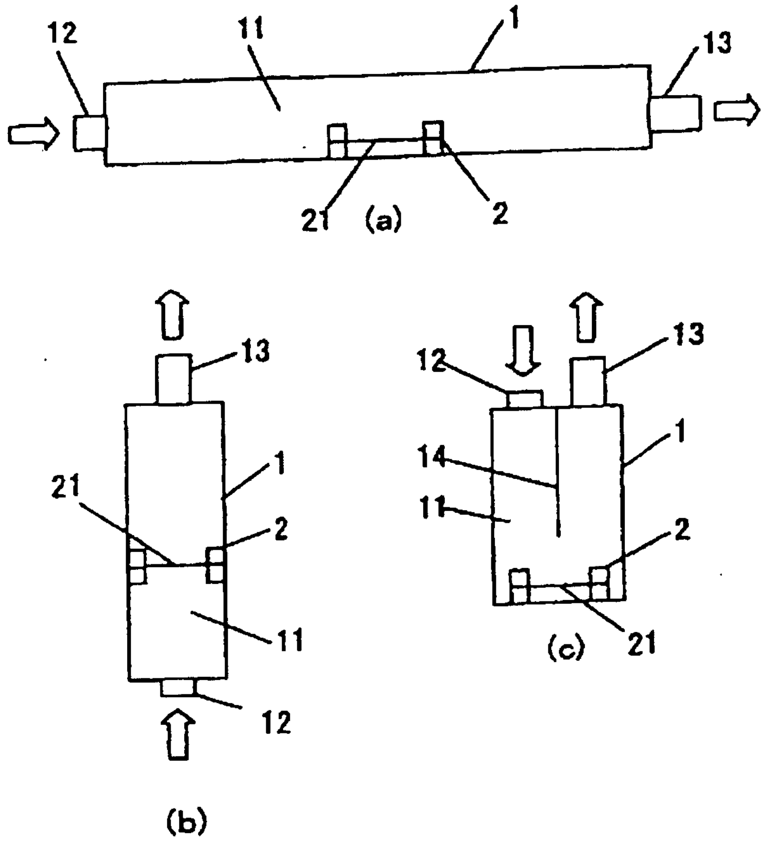

Fig. 7

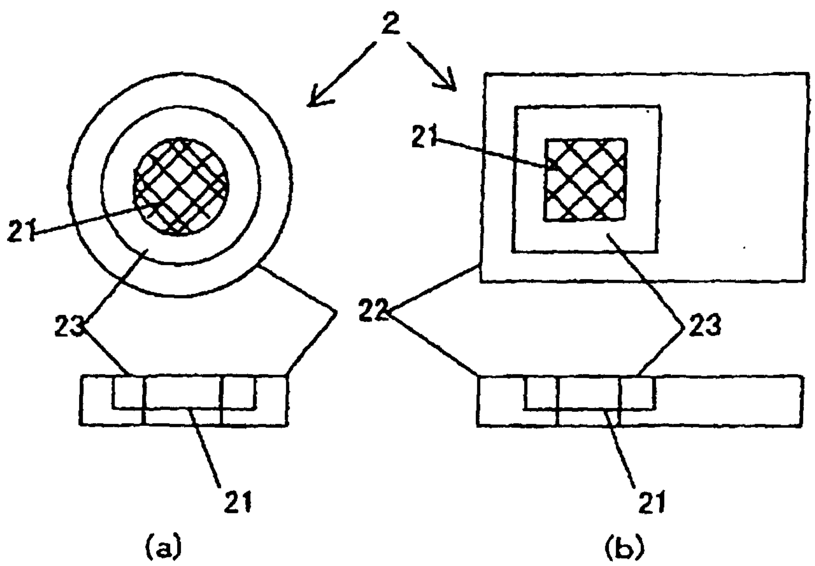

Fig. 8

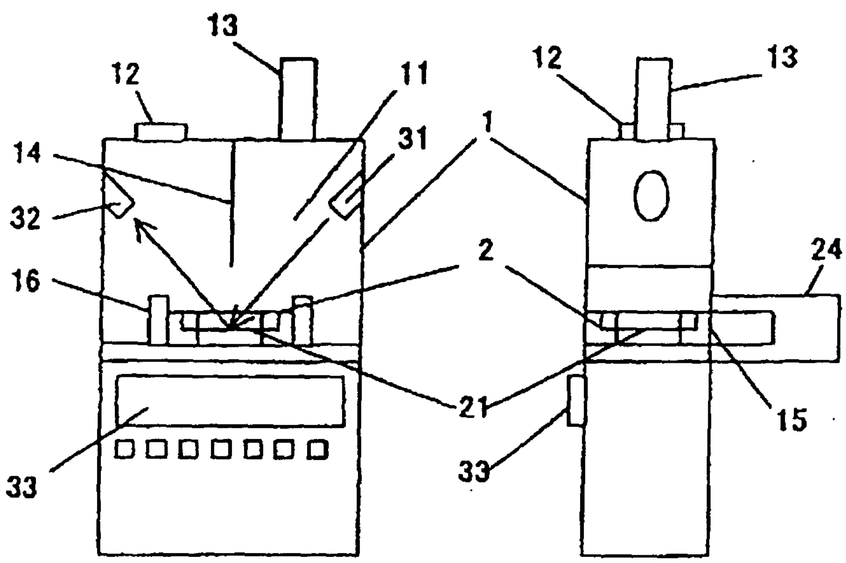

Fig. 9

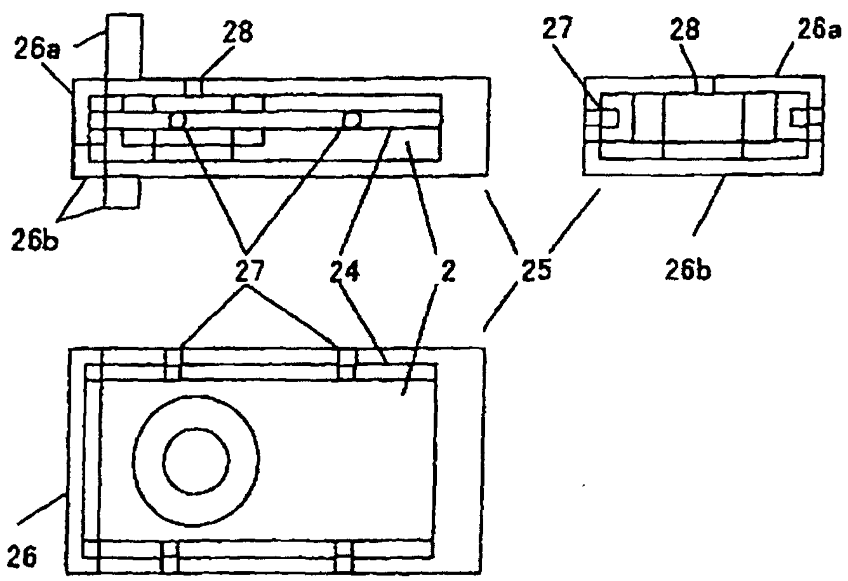

Fig. 10

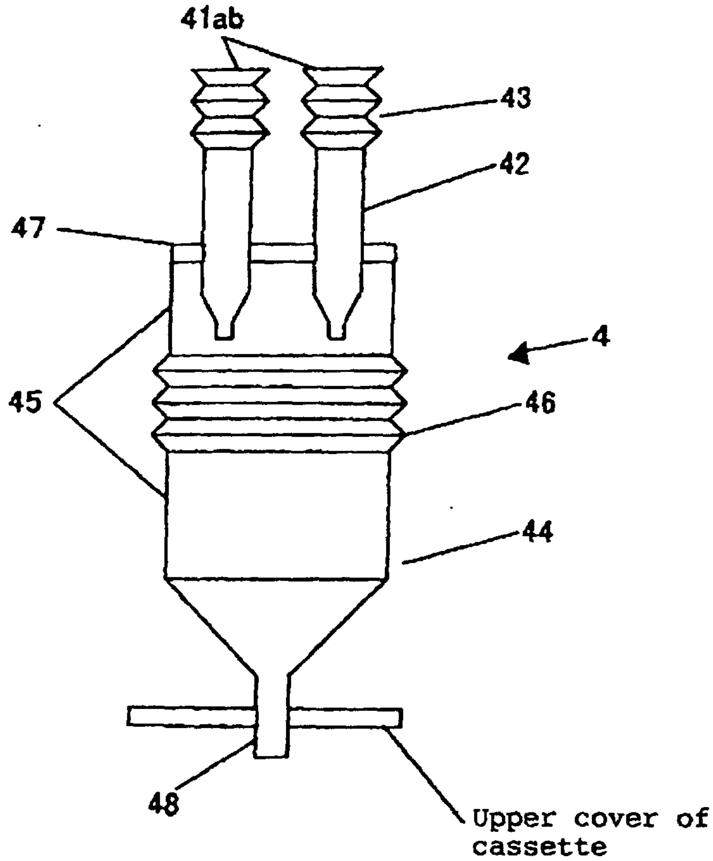

## INTERNATIONAL SEARCH REPORT

International application No.
PCT/JP03/03735

A. CLASSIFICATION OF SUBJECT MATTER
Int.Cl[7] G01N31/22, G01N21/77, G01N21/78

According to International Patent Classification (IPC) or to both national classification and IPC

B. FIELDS SEARCHED

Minimum documentation searched (classification system followed by classification symbols)
Int.Cl[7] G01N31/22, G01N21/77, G01N21/78

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 11-118784 A (Obayashi Corp.), 30 April, 1999 (30.04.99), & AU 5340798 A & WO 98/30897 A & EP 899570 A & US 6136608 A | 1-9 |
| A | JP 10-197511 A (Obayashi Corp.), 31 July, 1998 (31.07.98), & AU 5340798 A | 1-9 |
| A | JP 2000-81246 A (Nippon Telegraph And Telephone Corp.), 21 March, 2000 (21.03.00), & EP 901009 A & US 6362005 B | 1-9 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>01 July, 2003 (01.07.03) | Date of mailing of the international search report<br>29 July, 2003 (29.07.03) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/03735

C (Continuation). DOCUMENTS CONSIDERED TO BE RELEVANT

| Category* | Citation of document, with indication, where appropriate, of the relevant passages | Relevant to claim No. |
|---|---|---|
| A | JP 60-169569 U (Asahi Denka Kogyo Kabushiki Kaisha), 11 November, 1985 (11.11.85), (Family: none) | 1-9 |

Form PCT/ISA/210 (continuation of second sheet) (July 1998)